# EUROPEAN PATENT APPLICATION

(11) **EP 2 182 448 A1**
(43) Date of publication of application: **05.05.2010**
(21) Application number: 09174150.4
(22) Date of filing: 27.10.2009
(51) Int. Cl.: G06F 17/30

(54) **Federated configuration data management**

(30) Priority: 30.10.2008 US 289602
(71) Applicant: Hewlett-Packard Development Company, L.P., Houston, TX 77070 (US)
(72) Inventor: Tubman, Olga, 56100, Yehud (IL); Korenfeld, Boris, 56100, Yehud (IL); Ben Dor, Uri, 56100, Yehud (IL); Sityon, Arik, 56100, Yehud (IL)
(74) Representative: Lloyd, Richard Graham

(57) **Abstract**

A system, implemented as programming on a processor, and a corresponding method, provide for federating data search functions related to configuration of network objects. The system includes external data stores holding data related to the network objects, a configuration management database (CMDB), and a CMDB server coupled to the CMDB and the data stores. The CMDB server includes a federation engine that identifies network objects and a mapping engine that queries external data stores for reconciliation data and creates relationships between the network objects and federated data.

## Description

### Background

Current information technology (IT) environments employ a variety of IT management tools. Typically, each such tool has associated, its own data store. In such an environment, a user (human or machine) does not have the ability to obtain a complete view of data that is spread among these various data stores. In addition, the user cannot see aggregated data that may be associated with a specific application executing in the IT environment. This lack of an overall data view, and the inability to see data aggregation, creates information bottlenecks and additional overhead (time and money) to assemble a complete and accurate data view, and leads to decision-making that often is based on incomplete information. Finally, in these current IT environments, with uncorrelateable data, managers often cannot anticipate the effect of infrastructure changes.

### Summary

What is disclosed is a system, implemented as programming on a processor, for federating data search functions related to configuration of network objects. The system includes one or more external data store interfaces, where the data stores comprise data related to the network objects; a configuration management database (CMDB) adapter to connect to a CMDB and a CMDB server coupled to the CMDB and the data stores. The CMDB server comprises a federation engine including means for identifying network objects. The CMDB server also includes a mapping engine coupled to the federation engine. The mapping engine includes means for querying the external data stores for reconciliation data and means for creating relationships between federated data and the network objects.

Also disclosed is a method, implemented on a processor, for federating data search functions related to configuration of network objects. The method includes the steps of receiving a topological query language (TQL) query from a client, the query including one or more nodes; identifying the network objects to be subjected to the query; reconciling the identified network objects among a configuration management database (CMDB) and one or more external data stores; federating the query, comprising splitting the query into sub-queries, wherein each node in the query translates into an associated sub-query; applying the sub-queries to the reconciled network objects; and returning the results of the sub-queries to the client.

### Description of the Drawings

The detailed description will refer to the following drawings in which like numerals refer to like items, and in which:
Figure 1 shows selected components of an exemplary federated configuration data management system;
Figures 2A - 2C illustrate an exemplary process for creating a federated query;
Figure 3 illustrates an exemplary operation of the system of Figure 1; and
Figures 4A - 4I illustrate details and exemplary workflows for the operation of Figure 3.

### Detailed Description

Any large, modem organization may use different systems to produce, store, and search the organization's critical data. This diversity of systems, and in particular, the data stores which comprise these systems, results from many factors including lack of coordination among an organization's operating units, different rates of adopting new technology, mergers and acquisitions, and geographic separation of the organization's operating units. Combining the information from these various systems lets the organization to more effectively exploit the data the data stores contain.

Consider the example of a merger of two organizations to form a new organization. The new organization inherits the data stores of the original organizations. Many of those data stores will operate under control of different relational database management systems. After the merger, the new organization needs to be able to access the customer information from both sets of data stores, to analyze its new portfolio using existing and new applications, and, in general, to use the combined resources of both organizations through a common interface. The new organization also needs to be able to identify common customers and consolidate their accounts, even though the customer data may be stored in different databases and in different formats. In addition, the new organization must be able to combine the legacy data with new data available from external data sources, such as data on the Internet or from its business partners. Integrating these diverse data sources poses a substantial challenge.

There are many mechanisms for integrating data. These include application-specific solutions, application-integration frameworks, workflow (or business process integration) frameworks, digital libraries with portal-style or meta-search-engine integration, data warehousing, and database federation.

Data warehouses and database federation provide users with a powerful, high-level query language that can be used to combine, contrast, analyze, and otherwise manipulate their data. Technology for optimizing queries ensures that queries are answered efficiently, even though the queries are posed nonprocedurally, greatly easing application development. A data warehouse is built by loading data from one or more data sources into a newly defined schema in a relational database. The data are often cleansed and transformed in the load process. Changes in the underlying sources may cause changes to the load process, but the part of the application that deals with data analysis is protected. New data sources may introduce changes to the schema, requiring that a new load process for the new data be defined. SQL (Structured Query Language) views can further protect the application from such evolutions. However, any functions of the data source that are not a standard part of a relational database management system must be re-implemented in the warehouse or as part of the application.

A solution based on warehousing alone may not be possible or cost effective for various reasons. For example, it is not always feasible to move data from their original location to a data warehouse, and as described above, warehousing comes with its own maintenance and implementation costs. An improvement over traditional data warehousing is database federation.

Database federation refers to an architecture in which middleware, consisting of a database management system, provides uniform access to a number of heterogeneous data sources. The data sources are federated; that is, they are linked together into a unified system by the database management system to create a federated database.

In the prior art, federated data is generally accessed by manually executing an application distinct from the federated database. For example, federated data may be retained in a second database (accessible through a separate database management system) or a distinct product (such as a separate configuration management application). Data federated in this manner may be accessed by developing customized source integration logic or by invoking a pre-determined or fixed instance of a second application.

In the first of these approaches, custom logic (i.e., software) is developed for each federated database that allows a more automated interaction with the specified data store. In the second approach, the second application is used to manually search for the desired data. In a third approach, links to an application that could manipulate an instance of a federated data object are provided, but no ability to modify the invocation of this link (including parameter passing) is possible.

The herein disclosed federated configuration data management system overcomes deficiencies with current federated data management systems. The federated configuration data management system provides data transparency, which means masking from the user the differences, idiosyncrasies, and implementations of the underlying data sources. This transparency allows data queries to be applied as if all the data were in a single database, although, in fact, the data may be stored in a heterogeneous collection of data sources. The federated configuration data management system also supports heterogeneity, or the ability to accommodate a broad range of data sources, without restriction of hardware, software, data model, interface, or protocols. The federated configuration data management system further adds extensibility, or the ability to add new data sources dynamically in order to meet the changing needs of the business, and openness, or the ability to run applications unchanged: data are neither moved nor modified, and interfaces remain the same.

Because the federated configuration data management system shields its users from the need to know what the data stores are, what hardware and software those data stores run on, how those data sources are accessed (via what programming interface or language), and even how the data stored in those data stores are modeled and managed, a single query may access data from multiple data stores, joining and restricting, aggregating and analyzing the data as needed. Further, the data stores may not be database systems at all, but instead could be source from sensors to flat files to application programs to XML (Extensible Markup Language), for example.

The description that follows refers to specific implementations of a federated configuration data management system, and particularly to an IT system configuration management system, including the use of topological query language to access external data sources, and a configuration management database (CMDB) in which are stored at least links to the external data sources. However, those skilled in the art will appreciate that the federated database management system may be used for many other purposes besides configuration management.

Configuration management is the process responsible for maintaining information about configuration items required to deliver an IT service, including their relationships. The primary objective of configuration management is to underpin the delivery of IT services by providing accurate data to all IT service management processes when and where it is needed.

Configuration management manages information about configuration items throughout the lifecycle of a configuration item (CI). A CI is any component that needs to be managed in order to deliver an IT Service. CIs typically include hardware, software, buildings, people, and formal documentation such as process documentation and SLAs. Information about each CI is recorded in a configuration record within a configuration management database (CMDB). A configuration record is a record containing the details of a configuration item. Each configuration record documents the lifecycle of a single CI.

A CMDB is a database used to manage configuration records throughout the lifecycle of the CI associated with the configuration record. The CMDB records the attributes of each CI, and relationships with other CIs. A CMDB may also contain other information linked to CIs, for example incident, problem or change records. The CMDB is maintained by configuration management and is used by all IT service management processes.

A CMDB generally stores only the key information of CIs. Clients, which connect to the configuration management database, often need to use CI data which is stored in separate data stores in addition to the data stored in the CMDB. To present a seamless view of CI data pulled from a local CMDB, as well as one or more remote data stores, the CMDB needs to provide a federation feature.

A federation feature enables clients to request configuration item data from multiple data sources using CMDB application programming interfaces (APIs) without the need to know the actual location of the data. The federation feature searches multiple geographically and technologically disparate IT systems to locate and transform related data from the multiple separate data sources. The CMDB transparently combines the data from the multiple data sources and returns the combined data to the client.

However, there are several difficulties to presenting seamless data for clients of the CMDB. First, data for a single CI may reside in two or more federated data sources. In addition, the federated data sources may provide attributes for two or more CIs. A CMDB may have difficulty retrieving information from two or more data sources due to differences in data source types, data store access mechanism, and data schema. A CMDB may also have difficulty knowing which configuration items and attributes are stored in each data source.

In addition, two or more federated data stores may provide data for the same attribute for a CI. For example, in a networked computer system, a router may be referred to by name (e.g., HP_R1) in one data store and by Internet address (e.g., 128.00.00.1) in another data store. In such a case, the CMDB may have difficulty combining the attribute data due to determining which instance of the attribute data should be given preeminence. In other words, the CMDB may be unable to determine which data source to rely upon for the given attribute data. This can be a significant problem where the data for the given attribute provided by each data source differs in any respect. Thus, the herein described system for federated configuration data management must be able to recognize and reconcile these two identities as belonging to a single hardware device, namely, the router.

To provide enhanced access to CIs in these various data stores, an exemplary federated configuration data management system, specifically a federated universal CMDB (uCMDB) system, and corresponding method, are described below.

In describing the exemplary federated uCMDB system, the following terms will be used:

A data store is any data storage system, including a CMDB, or other database, where external CIs and relationships are located.

An external CI is a configuration item that does not originate from the uCMDB system. That is, the external CI is a class defined in the uCMDB class model, whose specific instances are stored in external data stores and not in the uCMDB.

Topology refers to the topological state (i.e., relationships or links) between objects. Objects also may have a non-topological state; that is, the attributes and behaviors over time. Relationships in topology are strictly binary in nature. That is, each relationship links exactly two topologically managed objects. Relationships of degree n are modeled by representing the relationships themselves as topologically managed objects, until a binary model is built to describe the degree n relationships. Using this approach, individual objects that are part of a larger resource can be aggregated. An aggregated object assumes the topological states of the individual objects that comprise the aggregated object.

Topology query language (TQL) refers to an object-oriented framework for describing applications and business services, and includes both physical and logical objects, their attributes, and their relationships to one another. TQL enables the creation of graphical views designed to capture relevant interdependencies (i.e., relationships) of items (including CIs) across IT services, applications and infrastructure groups. Federated TQL (FTQL) is a TQL that includes external CIs in its definition.

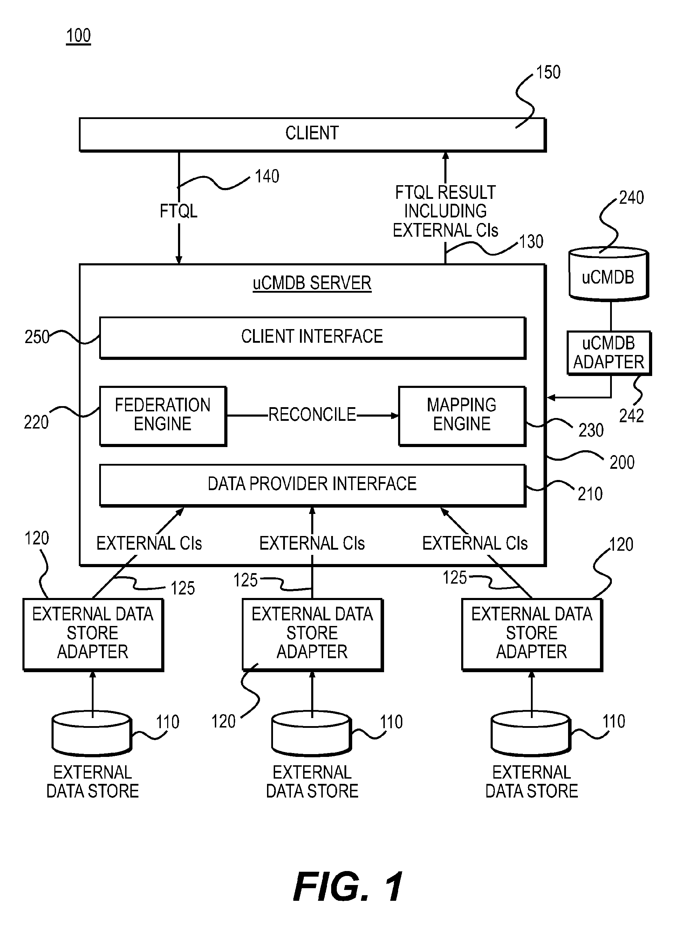

Figure 1 illustrates an exemplary federated uCMDB system 100, which incorporates the above-defined elements and features. The components that comprise the system 100 may exist as hardware, software, firmware, or a combination of hardware, software, and firmware.

The system 100 includes uCMDB server 200, which is coupled to external data stores 110 by way of external data store adapters 120 and, through adapter 242, to uCMDB 240, which stores configuration data. The external data stores 110 may be any data storage devices, including external CMDBs. The external data store adapters 120 may be developed in the JAVA programming language. Alternatively, generic OOB adapters may be used, changing only the XML configurations of the adapters.

Also coupled to the uCMDB server 200 is client 150. The client 150 may be any computing device, including, for example, a PC or a server. The client 150 issues TQL queries 140 and in return receives TQL results 130.

The uCMDB server 200 receives inputs, in the way of CIs, from the external data stores 110. The uCMDB server 200 receives TQL queries 140 from the client 150, and provides the results 130 of the queries 140 back to the client 150. The TQL results 130 include external CIs 125, as shown.

The uCMDB server 200 comprises a data provider interface 210, which communicates with the external data stores 110 and receives CIs from the external data stores 110 through the associated external data store adapter 120, a federation engine 220, and a mapping engine 230.

The federation engine 220 generally uses identification rules to identify network objects and to drive the reconciliation process. In an embodiment, the identification rules are organized into identification groups, with each rule specifying what attributes should be considered when determining a match, the type of object to be matched and the discovery source or dataset to which the rule applies. Identification groups may contain any number of rules and, in addition, may be ordered such that individual rules within a group are processed in a given order. The federation engine 220 further includes a reconciliation engine (not shown) for reconciling identities of network components as identified in the external stores 110 and the uCMBD 240, using the identification rules.

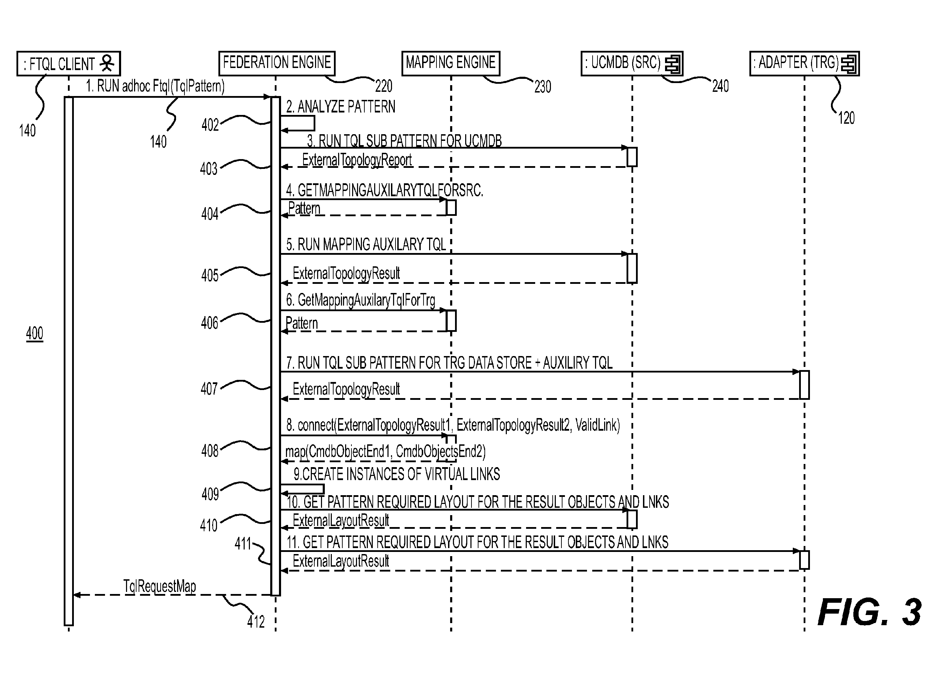

The system 100 performs federation activities over several data stores 110 as shown in Figure 1. The system 100, and an associated method (see, e.g., Figure 3), is able to relate configuration data from the uCMDB 240 to data from the external data stores 110 without any data replication. That is, data federation is performed "on-the-fly" using a federated query. To allow data retrieval, each external data store 110 is provided with a data store adapter 120. The data store adapter 120 provides specific capabilities of the associated data store, and retrieves the required data from that data store 110. Every request (FTQL query 140) to the data store 110 is made through that data store's adapter 240.

A federated TQL query uses the federation engine 220 and the mapping engine 230 to create appropriate external relationships between different external store CIs and the uCMDB CIs. The mapping is performed after reconciling uCMDB CIs and external CIs.

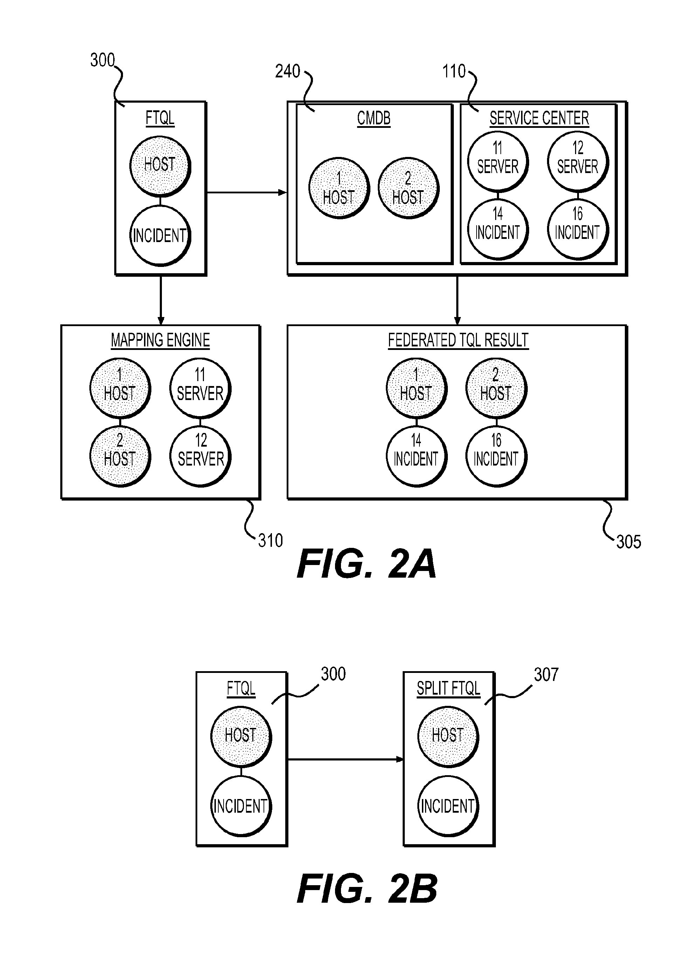

Figures 2A-C present an exemplary federated query between the uCMDB 240 and an external store 110. In the example, the uCMDB 240 identifies certain network components (servers) as host 1 and host 2; a Service Center (external data store) 110 identifies the network components as server 11 and server 12. The Service Center 110 also stores ticket information for the servers. Thus, the uCMDB 240 holds CIs that have been discovered by auto-discovery and the Service Center 110 manages ticket information related to the CIs held by the uCMDB 240. The federation in the example shown in Figures 2A-C is aimed at correlating the tickets to the uCMDB CIs. The Service Center's adapter (not shown) translates an external class model as a new class model ("incident"), and provides a new link "contains_incident" and a link between host and the extended class "incident". In addition, the federation engine 220 reconciles hosts and incidents. Referring to Figure 2A, a FTQL query 300 (a query to link hosts and incidents) is provided from a client 130 to the mapping engine 230 to produce the mapping 310. The mapping 310 relates hosts and servers of the uCMDB 240 and the Service Center 110. That is, host 1 maps to server 11 and host 2 maps to server 12. The result of the FTQL query 300 is federated TQL result 305, which shows the correlation between hosts and incidents. The following workflow illustrates the above-described federation on-the-fly:

The mapping engine 230 splits the FTQL query 300 into at least two sub-queries, where all nodes in a sub-query refer to the same data store. Each sub-query is connected to the other sub-queries by a virtual relationship. See Figure 2B, where the original FTQL query 300 is split into two sub-queries (split FTQL 307), host and incident.

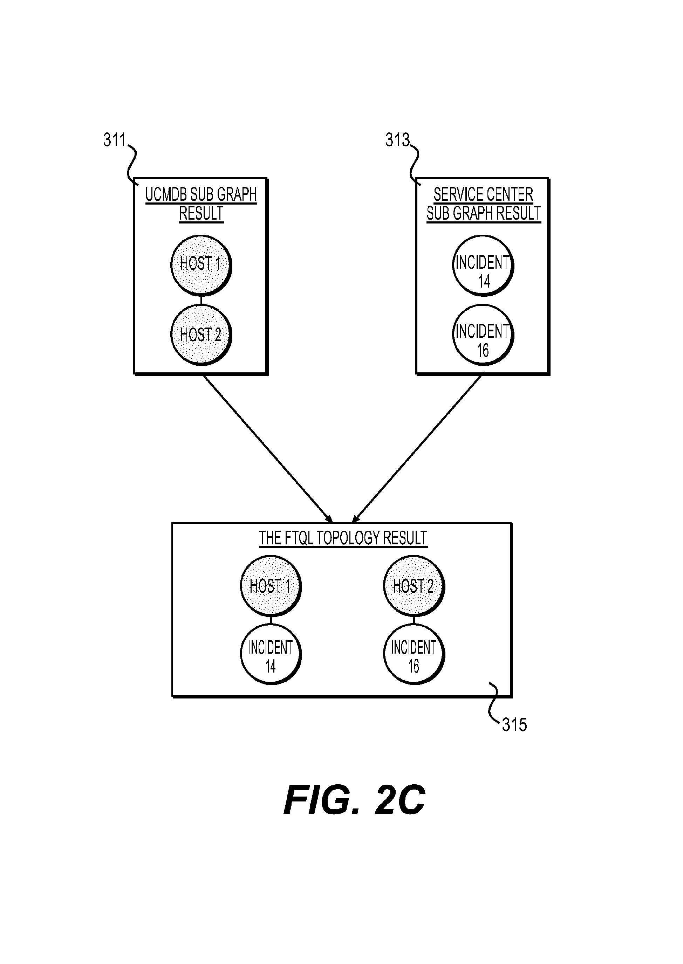

After the FTQL query 300 is split into sub-queries 307, the uCMDB server 200 calculates each sub-query topology and connects two appropriate sub-queries by creating virtual relationships between the appropriate nodes of the sub-queries. See Figure 2C, where the original FTQL query 300 of Figure 2A has been split, resulting in uCMDB sub-query 311 and Service Center sub-query 313. With these two sub-queries 311 and 313, the uCMDB server 200 calculates the resulting FTQL topology result, 315. Thus, host 1 relates to server 11 and host 2 relates to server 12, where the hosts are defined in the uCMDB 240 and the servers in the Service Center (external data store) 110. Incident 14 relates to server 11 and incident 16 relates to server 12, where the incidents are defined in the Service Center 110. Thus, host 1 maps to incident 14 and host 2 maps to incident 16, and objects in the uCMDB 240 are mapped to objects in the Service Center 110.

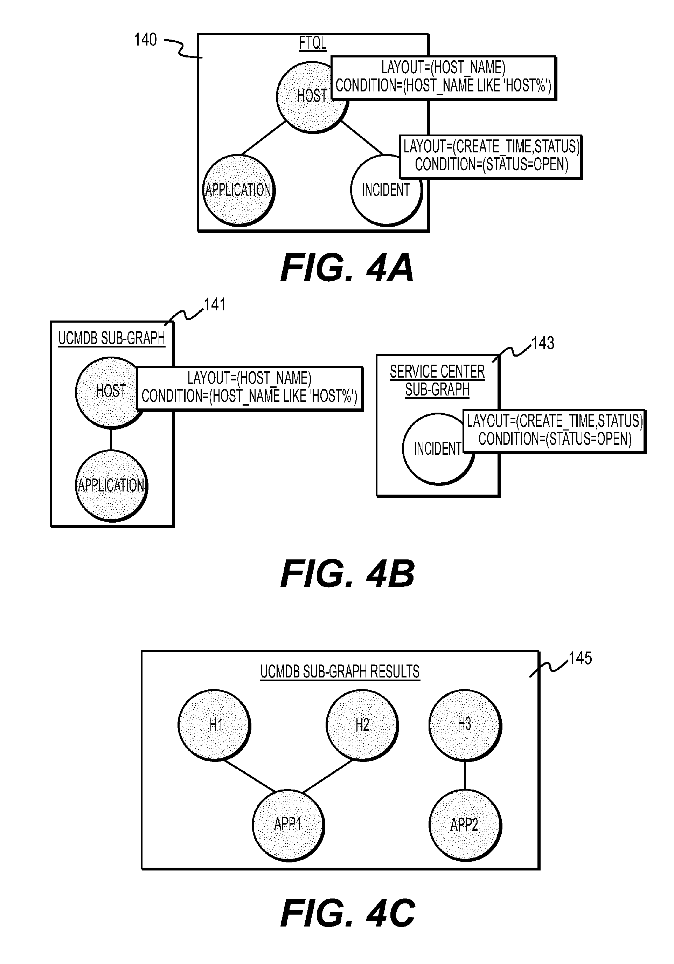

Figure 3 is a sequence diagram illustrating an exemplary operation 400 of the uCMDB system 100 of Figure 1. The components of the system 100 that are illustrated in Figure 3 include the client 150, federation engine 220, mapping engine 230, uCMDB database 240, and external data store adapter 120. Figures 4A - 4I illustrate the various objects created and used by the operation 400. The operation 400 begins at step 401, when the client 150 presents a FTQL query 140 to the uCMDB server 200 by way of interface 250. The FTQL query 140 is passed to the federation engine 220, which analyzes (step 402) the query to determine a pattern for the data request. After analyzing the pattern, the federation engine 220 recognizes the virtual relationship between host and incident and provides this relationship to the mapping engine 230. The mapping engine 230 splits the FTQL 140 into two sub-queries: uCMDB sub-query 141 and Service Center sub-query 143 (see Figures 4A and 4B).

Returning to Figure 3, in step 403, the federation engine 220 runs the TQL sub-queries (i.e., the uCMDB sub-query 141 of Figure 4B) on the uCMDB 240, and receives an external topology result 145, as shown in Figure 4C.

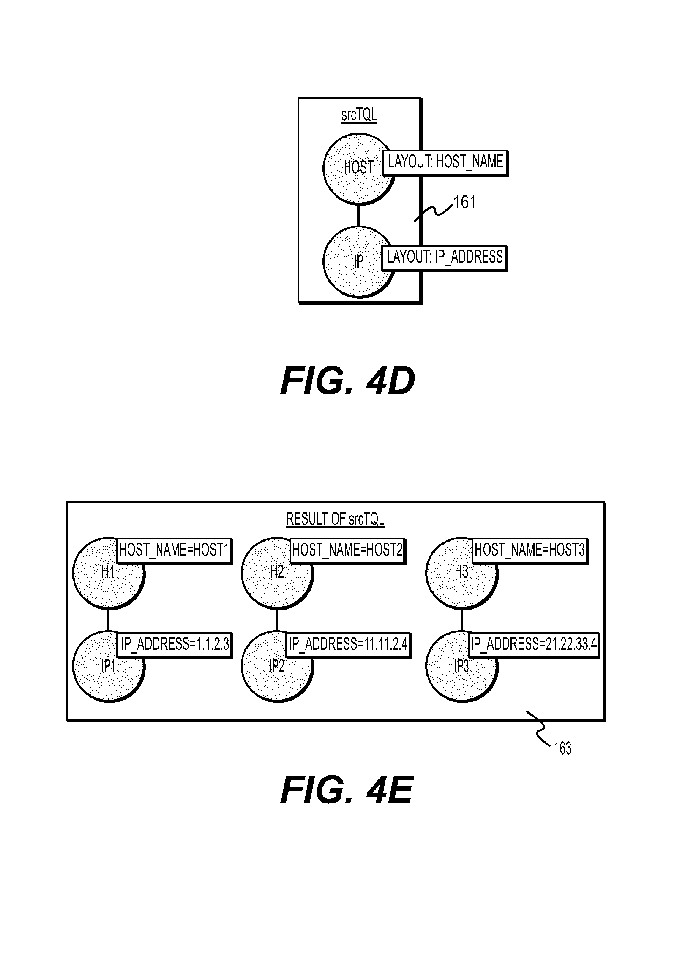

Returning to Figure 3, in step 404, the federation engine 220 passes the topology result 145 to the mapping engine 230, and the mapping engine 230 returns the appropriate data search pattern (srcTQL) 161 shown in Figure 4D to the federation engine 220. The search pattern 161 contains the information needed to connect (relate) data received from two separate data stores. Note that the pattern 161 includes the host name and address for the data stores.

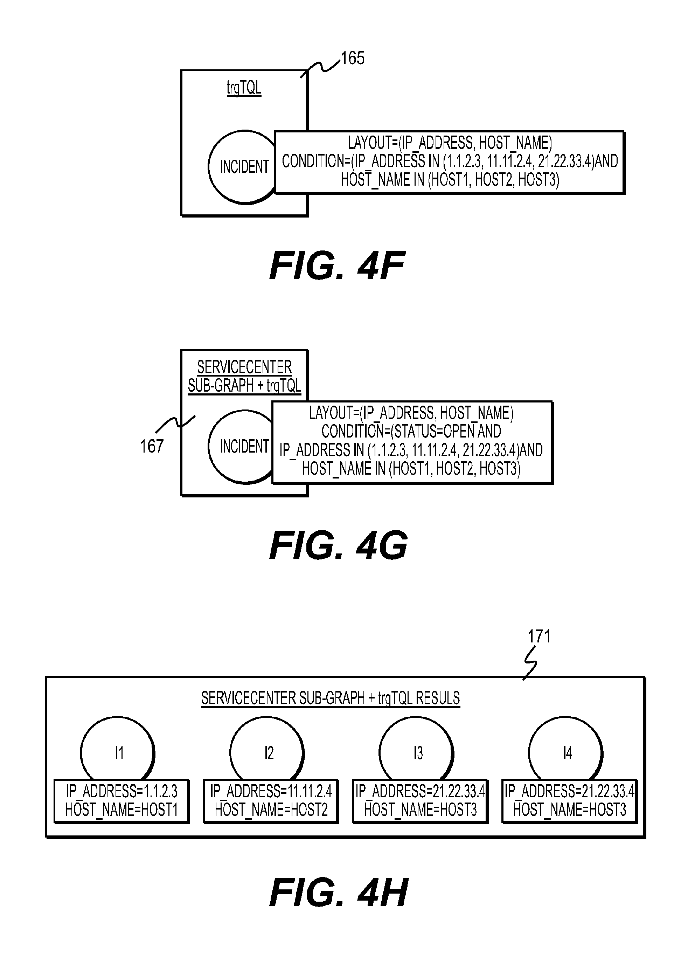

Returning to Figure 3, in step 405, the federation engine 220 runs a TQL mapping request on the uCMDB 240 and receives in return an external topology result. In step 406 of Figure 3, the federation engine 220 provides the topology result to the mapping engine 230, and receives in return, a TQL sub-query search pattern 163 (see Figure 4E) to run on the external data source 110. In step 407, the TQL sub-query search pattern is provided to the adapter 120, which returns an external topology result 165 for the external data store 110, as shown in Figure 4F.

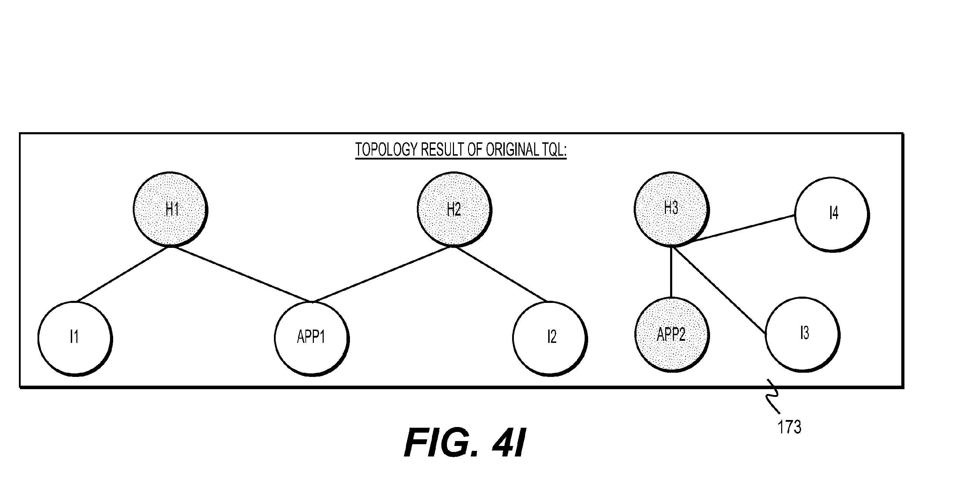

In step 408 of Figure 3, the federation engine 220 connects the sub-query search pattern from the external store 110 and the trgTQL 165 and provides the connection to the mapping engine 230, which returns a topology result 167 of the original FTQL, as shown in Figure 4G. The topology result of the original FTQL is run on the adapter 120, and the results are shown in Figure 4H. Next, in Figure 3, step 409, the federation engine 220 creates the virtual links among the objects in the sub-queries and provides (step 410) the links, along with the required layout for the result, to the uCMDB 240. Finally, in step 411, the required links and layout are provided to the adapter 120, and results are returned to the federation engine 220. Figure 4I shows the results 173 of the combined FTQL query after running the split FTQL queries on the uCMDB 240 and the data store 110. In step 412, the results of the original FTQL query are provided by the mapping engine 230 to the client 130 by way of the interface 250.

The various disclosed embodiments may be implemented as a method, system, and/or apparatus. As one example, exemplary embodiments are implemented as one or more computer software programs to implement the methods described herein. The software is implemented as one or more modules (also referred to as code subroutines, or "objects" in object-oriented programming). The location of the software will differ for the various alternative embodiments. The software programming code, for example, is accessed by a processor or processors of the computer or server from a long-term storage media of some type, such as semiconductor, magnetic, and optical devices, including a removable disk or a hard drive. The code may be distributed on such media, or may be distributed to network operators from the memory or storage of one computer system over a network of some type to other computer systems for use by operators of such other systems. Alternatively, the programming code is embodied in the memory (such as memory of a handheld portable electronic device) and accessed by a processor using a bus. The techniques and methods for embodying software programming code in memory, on physical media, and/or distributing software code via networks are well known and will not be further discussed herein.

The terms and descriptions used herein are set forth by way of illustration only and are not meant as limitations. Those skilled in the art will recognize that many variations are possible within the spirit and scope of the invention as defined in the following claims, and their equivalents, in which all terms are to be understood in their broadest possible sense unless otherwise indicated.

## Claims

1. A system, implemented as programming on a processor, for federating data search functions related to configuration of network objects, comprising:
one or more external data store adapter for accessing data stores comprising data related to the network objects;
a configuration management database (CMDB) adapter for accessing a CMDB;
a CMDB server coupled to the CMDB and the data stores, wherein the CMDB server, comprises:
a federation engine comprising means for identifying the network objects, and
a mapping engine coupled to the federation engine, comprising means for querying the external data stores, and
means for creating relationships between the network objects and federated data.

2. The system of claim 1, further comprising a client interface for connecting to a client to the CMDB server.

3. The system of claim 1, wherein the sub-queries are connected by virtual relationships.

4. The system of claim 1, wherein the rule set includes names of the network objects.

5. The system of claim 1, wherein the rule set includes functions of the network objects.

6. The system of claim 1, wherein the network objects are hardware devices including servers, routers, switches, and memory devices.

7. The system of claim 1, wherein the network objects are one of software and firmware, including operating systems and applications.

8. A method, implemented on a processor, for federating data search functions related to configuration of network objects, comprising:
receiving a topological query language (TQL) query from a client, the query including one or more nodes;
identifying the network objects to be subjected to the query;
reconciling the identified network objects among a configuration management database (CMDB) and one or more external data stores;
federating the query, comprising splitting the query into sub-queries, wherein each node in the query translates into an associated sub-query;
applying the sub-queries to the reconciled network objects; and
returning the results of the sub-queries to the client.

9. The method of claim 8, wherein the network objects are hardware resources.

10. The method of claim 8, wherein the network objects are software resources.

11. The method of claim 8, wherein reconciling the identified network objects comprises applying a rule set to the identified network objects, wherein the rule set includes object names and object functions.
